# EUROPEAN PATENT SPECIFICATION

(11) **EP 2 925 474 B1**
(45) Date of publication and mention of the grant of the patent: **10.05.2017**
(21) Application number: 14843194.3
(22) Date of filing: 01.08.2014
(51) Int. Cl.: B23D 61/18, B24B 27/06, B24D 11/00

(54) **STRUCTURED SAW WIRE MAINTAINING CRIMP PROPERTY UNDER SLICING TENSION**
UNTER SÄGESPANNUNG DIE KRÄUSELEIGENSCHAFTEN AUFRECHTERHALTENDER STRUKTURIERTER SÄGEDRAHT
FIL DE SCIAGE STRUCTURÉ CONSERVANT UNE PROPRIÉTÉ D'ONDULATION SOUS TENSION DE COUPE

(30) Priority: 04.02.2014 KR 20140012786
(43) Date of publication of application: 07.10.2015
(73) Proprietor: Hongduk Industrial Co. Ltd., Pohang-si, Gyeongsangbuk-do 790-240 (KR)
(72) Inventor: LIM, Seung Ho, Gyeongju-si Gyeongsangbuk-do 780-772 (KR)
(74) Representative: Steiniger, Carmen
(86) International application number: PCT/KR2014/007143
(87) International publication number: WO 2015/119344

(56) References cited:
- WO-A1-2012/069314
- JP-A- 2000 288 901
- JP-A- 2001 205 551
- JP-A- 2004 276 207
- JP-A- 2012 139 743

## Description

### TECHNICAL FIELD

The inventive concept relates to a structured saw wire maintaining a crimp property under slicing tension, and more particularly, to a structured saw wire maintaining a crimp property under slicing tension, which exhibits little crimp deformation even when slicing tension is applied to the structured saw wire for cutting a material to-be-cut, maintains a crimp property, enhances cutting capability, prevents a qualitative drop at both ends of the structured saw wire, and reduces a defect rate and thus enhances the productivity of a final product such as a wafer.

### BACKGROUND ART

A saw wire used in a saw machine, in general, cuts a material to-be-cut, as the saw wire moves, while in contact with the material to-be-cut at a proper pressure, along with a cutting material where grinding particles, such as silicon carbide powder, diamond powder, etc., and oil, etc. are mixed.

A method of cutting hard material such as a silicon block by using the saw wire is as follows: The saw wire is wound along a plurality of grooves in a plurality of rollers, and rows of the saw wire are driven with a specific force applied to the silicon block, or a material to-be-cut. At this stage, grinding particles are supplied between rows of the saw wire and the material to-be-cut to cut the silicon block into wafers due to the cutting effect of the grinding particles. The efficiency of a cutting process and a thickness quality of wafers depend on several factors such as characteristics of a hard material block undergoing cutting and the speed of the saw wire. The most important factor among these is the amount of the cutting material which may be included with the saw wire.

Each row of the saw wire used for cutting the silicon block is conventionally wound on rollers for 1,000 to 3,000 times. Such a wire moves along grooves prepared on rollers to cut a hard material, and while the hard material is cut, the cutting material grinds not only the hard material but also the saw wire and reduces the thickness of the saw wire, which is a problem. At the beginning of cutting, a lot of cutting material may be accompanied by a plating layer of soft material existing on the surface of the saw wire; however, as the plating layer is removed while the hard material is cut, a basis layer is revealed and the capability of including the cutting material decreases.

Thus, it is necessary to enhance the capability of including the cutting material while the saw wire is in use. In the international patent application WO 90/12670, a saw wire is provided which accompanies the cutting material well. This feature may be accomplished by changing the outer surface of the saw wire. According to an embodiment of the patent application, a number of micro-cavities are allocated on the surface of the saw wire. Also, according to another embodiment of the patent application, the saw wire has a plurality of grooves in a circumferential direction. These solutions may enhance the capability of including the cutting material; however, changing the outer surface of the saw wire generally is costly and time consuming. JP2004276207 is considered to be the prior art closest to the present invention and discloses a saw wire having a wavy shape in order to accelerate the discharge of chips and to improve contact of the saw wire with a surface to be cut.

### DETAILED DESCRIPTION OF THE INVENTIVE CONCEPT

### TECHNICAL PROBLEM

The inventive concept provides a structured saw wire maintaining a crimp property under slicing tension which exhibits little crimp deformation even when slicing tension is applied to the saw wire for cutting a material to-be-cut, maintains a crimp property, enhances the capability of including and cutting by using a cutting material, prevents a qualitative drop at both ends of the saw wire, and reduces a defect rate and thus enhances the productivity of a final product such as a wafer.

### TECHNICAL SOLUTION

According to one or more embodiments of the present invention, the structured saw wire maintaining crimp property under slicing tension includes a saw wire, with continuous crimp formed thereon, features that a unit crimp, continuously formed in a zigzag shape, includes a first portion and a second portion bent and extended from the first portion and the second portion is bent from the first portion such that, when an imaginary circle adjoining the edge formed by the first portion and the second portion is considered, the radius of the imaginary circle or the radius of curvature is formed as 5 through 20 times the diameter of the wire.

According to one or more embodiments of the present invention, it is desirable that seriated unit crimp is formed to rotate in one direction when the unit crimp moves in the longitudinal direction of the saw wire.

Additional aspects will be set forth in part in the description which follows and, in part, will be apparent from the description, or may be learned by practice of the presented embodiments.

### ADVANTAGEOUS EFFECTS

According to one or more of the above embodiments of the present invention, the structured saw wire maintaining a crimp property under slicing tension may exhibit little crimp deformation even when slicing tension is applied to the structured saw wire for cutting a material to-be-cut and maintains a crimp property. Thus, the amount of cutting material due to crimps may be increased and the capability to cut the material to-be-cut may be enhanced.

### DESCRIPTION OF THE DRAWINGS

FIG. 1 is a side view of a structured saw wire maintaining a crimp property under slicing tension, according to an embodiment of the present invention.
FIG. 2 is a an enlarged view of a principle part selected from FIG. 1.
FIG. 3 is a side view of the structured saw wire in a state where slicing tension is applied to both ends of the structured saw wire.
FIG. 4 is a conceptual diagram illustrating an oblique view of the structured saw wire maintaining a crimp property under slicing tension, according to another embodiment of the present invention.

### BEST MODE

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

The present invention includes a saw wire used in a wire saw machine and to cut and slice semiconductors, ceramic, super-hard alloys, etc.

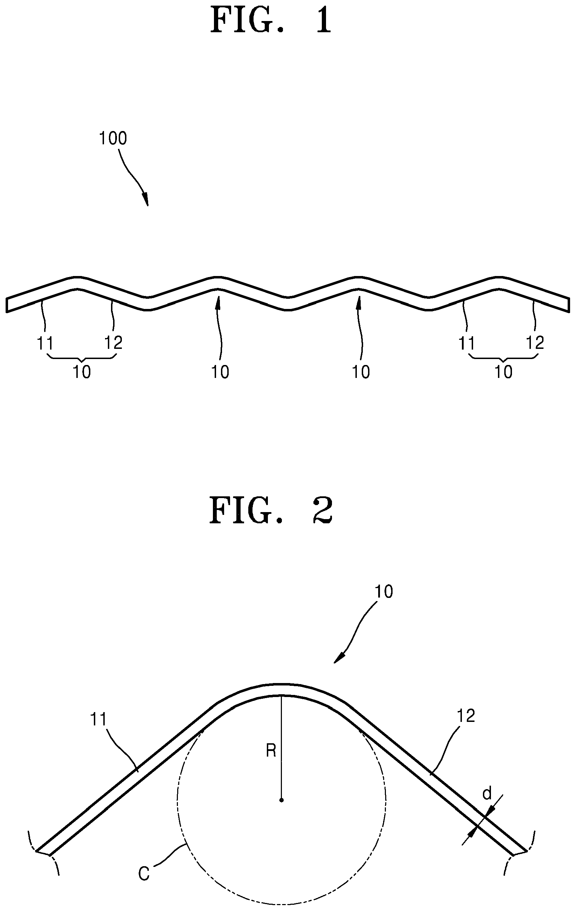

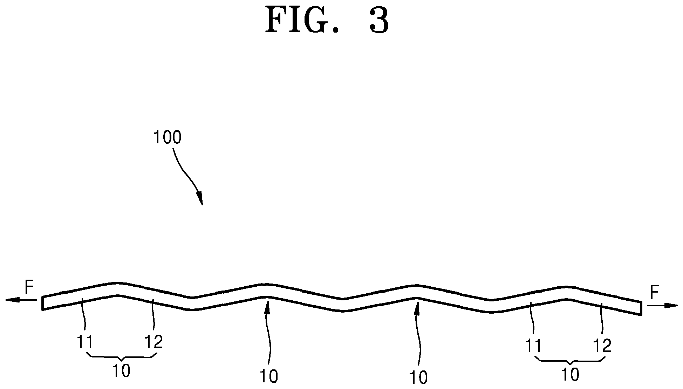

FIG. 1 is a side view of a structured saw wire 100 maintaining a crimp property under slicing tension, according to an embodiment of the present invention, FIG. 2 is an enlarged view of a principle part selected from FIG. 1, and FIG. 3 is a side view of the structured saw wire 100 in a state where slicing tension is applied to both ends of the saw wire

Referring to FIGS. 1 and 2, the structured saw wire 100 maintaining a crimp property under slicing tension, according to an embodiment of the present invention, has a unit crimp 10 continuously formed therein and has a feature whereby the unit crimp 10 maintains a property when slicing tension is applied to both ends of the structured saw wire 100 for cutting a material to-be-cut.

Specifically, the unit crimp 10 includes a first portion 11 and a second portion 12 that are continuously formed in a zigzag shape, wherein the second portion 12 is bent and extended from the first portion 11 such that an imaginary circle adjoining an edge formed by the first portion 11 and the second portion has a radius or a radius of curvature that is from 5 to 20 times a cross-sectional diameter d of the structured saw wire 100.

Specifically, the unit crimp 10 includes the first portion 11 and the second portion 12. The shape of the edge formed by the first portion 11 meeting the second portion 12 is sharp. Although an edge portion has a substantially rounded shape, the edge portion is generally formed sharp.

According to an embodiment of the present invention, the continuous unit crimp 10 being formed in the structured saw wire 100 means that the structured saw wire 100 itself is manufactured to have a zigzag shape.

As illustrated in FIG. 2, the radius of curvature R of the imaginary circle C adjoining the edge formed by the first portion 11 and the second portion 12 is from 5 to 20 times the cross-sectional diameter d of the structured saw wire 100. The radius of curvature R is the radius of the imaginary circle C.

FIG. 1 illustrates a state of free tension before slicing tension is applied to the structured saw wire 100 with the unit crimp 10 continuously formed therein and FIG. 3 illustrates a state where slicing tension is applied to the structured saw wire 100 in FIG. 1.

As illustrated in FIG. 3, the structured saw wire 100 is subjected to tension in a direction where the unit crimp 10 is extended when slicing tension pulling both ends of the structured saw wire 100 is applied.

Accordingly, the height of the edge is lowered and the structured saw wire 100 is generally straightened. In the present disclosure, the radius of curvature R is from 5 to 20 times the cross-sectional diameter d of the structured saw wire 100, and thus, the shape of the unit crimp 10 is maintained in a state where slicing tension is applied.

When the radius of curvature R is less than 5 times the cross-sectional diameter d of the structured saw wire 100, which indicates that the second portion 12 is formed by excessive bending as the second portion 12 is bent and extended from the first portion11, the structured saw wire 100 may break either at the time of manufacturing the structured saw wire 100 or when the structured saw wire 100 is straightened by applying the slicing tension after being excessively bent.

On the other hand, when the radius of curvature R is more than 20 times the cross-sectional diameter d of the structured saw wire 100, which indicates that the second portion 12 is formed by gradual bending as the second portion 12 is bent and extended from the first portion 11, the shape of the unit crimp 10 is maintained in a state where slicing tension is not applied; however, in the state where slicing tension is applied, the structured saw wire 100 is straightened and the unit crimp 10 is, in general, gradually straightened to cause the crimp effect to decrease. In this case, the wear rate of the structured saw wire 100 significantly increases, the cutting efficiency by the structured saw wire 100 decreases, and a life of the structured saw wire 100 is reduced. In addition, when slicing tension is applied, both ends of the structured saw wire 100 are subjected to specifically higher tension, which causes a result that the structured saw wire 100 is straightened more gradually at both ends of the structured saw wire 100 than any other parts of the structured saw wire 100 and the surface quality of a portion of the material to-be-cut, which is cut at both ends, is significantly reduced.

According to an embodiment of the present invention, the crimp property may be maintained even in a state where slicing tension is applied through minimizing the shape deformation of the unit crimp 10. In general, the structured saw wire 100 relatively moves on the material to-be-cut and cuts the material to-be-cut while applying pressure thereon. The material to-be-cut, for example, a silicon block, is cut into wafers as a cutting material is provided between the structured saw wire 100 and the material to-be-cut. The cutting material is used after conventional mixing of grinding particles, such as silicon carbide powder, diamond powder, etc., with oil, etc.

The unit crimp 10 provides an effect of supplying the cutting material onto the groove formed according to bending of the first portion 11 and the second portion 12, and when the structured saw wire 100 applies pressure to the material to-be-cut, the unit crimp 10 enhances a cutting capability by inducing the cutting material to contact the material to-be-cut effectively. According to an embodiment of the present invention, such an operation of the unit crimp 10 may be completely performed while the unit crimp 10 maintains its shape even in a state where slicing tension is applied.

Also, since the deformation of the unit crimp 10 is minimized at both ends of the structured saw wire 100 while slicing tension applied, the reduction in the surface quality of the portion of the material to-be-cut, which is cut at both ends, may be prevented.

In addition, since the deformation of the unit crimp 10 is minimized in a state where slicing tension is applied and the straightening of the structured saw wire 100 is prevented, the wear of the structured saw wire 100 is reduced, cutting capability is enhanced, and a life of the structured saw wire 100 is increased.

With such operations and effects, the productivity of a final product produced after cutting a material to-be-cut, for example, a wafer, may increase and wafer defects such as a saw mark may be reduced.

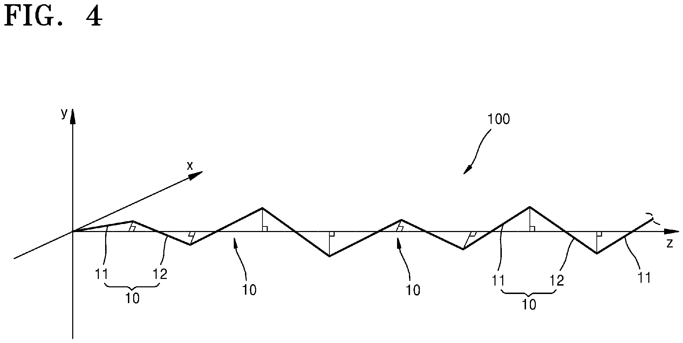

FIG. 4 conceptually illustrates an oblique view of the structured saw wire 100 maintaining a crimp property under slicing tension, according to another embodiment of the present invention. In FIG. 4, identical components as in FIG. 1 are assigned identical reference numbers.

As illustrated in FIG. 4, the structured saw wire 100 according to an embodiment of the present invention has the unit crimp 10 that is formed to rotate in one direction when the unit crimp 10 moves in the longitudinal direction of the saw wire 100.

When the structured saw wire 100 is seen at the end of Z-axis in FIG. 4 toward the origin, the unit crimp 10 rotates counterclockwise when the unit crimp 10 moves in a longitudinal direction from the origin to the end of Z-axis. Specifically, the unit crimp 10 initially at the origin is formed on the X-Z plane, and the unit crimp 10 formed as a second one immediately following the unit crimp 10 at the origin is on the Y-Z plane. The unit crimp 10 formed as a second one is rotated 90 degrees counterclockwise with respect to the first unit crimp 10.

Subsequently, the third unit crimp 10 is formed again on the X-Z plane. The unit crimp 10 formed as the third one is rotated by 90 degrees more counterclockwise with respect to the second unit crimp 10. Also, the fourth unit crimp 10 is formed on the Y-Z plane. The unit crimp 10 formed as the fourth one is rotated by 90 degrees more counterclockwise with respect to the third unit crimp 10.

According to an embodiment of the present invention, by forming the structured saw wire 100 in a state similar to that of FIG. 1 and twisting and rotating the structured saw wire 100 formed as shown in FIG. 1, the unit crimp 10 may be formed to have a rotatable shape.

FIG. 4 illustrates a simplified drawing for easy understanding of the rotation of the unit crimp 10 in one direction. In other words, according to FIG. 4, the unit crimp 10 is illustrated to be alternately located on the X-Z plane and the Y-Z plane; however, planes where the unit crimp 10 is formed are not limited thereto.

When the unit crimp 10 is realized to rotate with the structured saw wire 100 by twisting in one direction and rotating the structured saw wire 100 in FIG. 1, the unit crimp 10 practically forms a helix as the unit crimp 10 moves in the longitudinal direction of the structured saw wire 100. In other words, the trajectory of the peak, where the first portion 11 and the second portion 12 meet, forms a helix.

According to an embodiment of the present invention, as well as the effect provided by embodiments in FIG.1, the feeding and removal capabilities of the cutting material are also enhanced over the embodiment of FIG. 1, and the one-sided wear of the structured saw wire 100 is reduced.

As described above, according to the one or more of the above embodiments of the present invention, the structured saw wire maintaining a crimp property under slicing tension may exhibit little crimp deformation even when slicing tension is applied to the structured saw wire for cutting a material to-be-cut and maintains a crimp property. Thus, the amount of cutting material due to crimps may be increased and the capability to cut the material to-be-cut may be enhanced.

Also, since a crimp property is maintained even when slicing tension is applied to the structured saw wire, a qualitative drop especially at both ends of the structured saw wire is prevented. Thus, the productivity of a final product such as a wafer is enhanced and a defect rate is reduced.

It should be understood that the exemplary embodiments described herein should be considered in a descriptive sense only and not for purposes of limitation. Descriptions of features or aspects within each embodiment should typically be considered as available for other similar features or aspects in other embodiments.

While one or more embodiments of the present invention have been described with reference to the figures, it will be understood by those of ordinary skill in the art that various changes in form and details may be made therein without departing from the scope of the present invention as defined by the following claims.

## Claims

1. A structured saw wire (100) maintaining a crimp property under slicing tension, the structured saw wire comprising a unit crimp (10) that is continuously formed in a zigzag shape, wherein the unit crimp comprises a first portion (11) and a second portion (12) which is bent and extended from the first portion such that an imaginary circle adjoining edges formed by the first portion and the second portion has a radius or a radius of curvature (R) that is from 5 to 20 times a cross-sectional diameter (d) of the structured saw wire.

2. The structured saw wire (100) having asymmetrical crimp (10) of claim 1, wherein the unit crimp is formed to rotate in one direction when the unit crimp moves in the longitudinal direction of the structured saw wire.

## Patentansprüche

1. Ein unter Sägespannung die Kräuseleigenschaften aufrechterhaltender strukturierter Sägedraht (100), der strukturierte Sägedraht umfasst eine Kräuseleinheit (10), die kontinuierlich in einer Zickzack-Form ausgebildet ist, wobei die Kräuseleinheit einen ersten Teil (11) und einen zweiten Teil (12) umfasst, welcher gebogen ist und sich von dem ersten Teil derart erstreckt, dass ein an Ecken, die durch den ersten Teil und den zweiten Teil ausgebildet werden, angrenzender imaginärer Kreis einen Radius oder einen Krümmungsradius (R) hat, der das 5- bis 20-fache eines Querschnittsdurchmessers (d) des strukturierten Sägedrahts ist.

2. Der strukturierte Sägedraht (100) mit asymmetrischen Kräuseln (10) nach Anspruch 1, wobei die Kräuseleinheit so geformt ist, dass sie sich in eine Richtung dreht, wenn sich die Kräuseleinheit in Längsrichtung des strukturierten Sägedrahtes bewegt.

## Revendications

1. Fil de sciage structuré (100) conservant une propriété d'ondulation sous tension de coupe, le fil de sciage structuré comprenant une ondulation unitaire (10) qui est formée en continu en forme de zigzag,
dans lequel la ondulation unitaire comprend une première portion (11) et une seconde portion (12) qui est courbée et étendue depuis la première portion de sorte qu'un cercle imaginaire contigu à des bords formé par la première portion et la seconde portion a un rayon ou un rayon de courbure (R) qui est de 5 à 20 fois un diamètre en coupe (d) du fil de sciage structuré.

2. Fil de sciage structuré (100) ayant une ondulation asymétrique (10) selon la revendication 1, dans lequel l'ondulation unitaire est formée pour tourner dans une direction lorsque l'ondulation unitaire se déplace dans la direction longitudinale du fil de sciage structuré.
